# EUROPEAN PATENT SPECIFICATION

(11) **EP 0 963 707 B1**
(45) Date of publication and mention of the grant of the patent: **07.05.2003**
(21) Application number: 99201827.5
(22) Date of filing: 08.06.1999
(51) Int. Cl.: A23L 1/236

(54) **Sweetener tablet**
Süssstofftablette
Comprimé d'édulcorant

(30) Priority: 09.06.1998 NL 1009350
(43) Date of publication of application: 15.12.1999
(73) Proprietor: Sara Lee/DE N.V., 3532 AA Utrecht (NL)
(72) Inventor: Renkens, Annemarie Johanna Maria, 3448 DZ Woerden (NL)
(74) Representative: Prins, Adrianus Willem

(56) References cited:
- EP-A- 0 433 004
- EP-A- 0 437 098
- EP-A- 0 500 977
- EP-A- 0 658 340
- WO-A-98/11878
- FR-A- 2 004 305
- US-A- 2 803 551
- US-A- 3 653 923
- US-A- 5 204 115
- DATABASE WPI Section Ch, Week 7947 Derwent Publications Ltd., London, GB; Class D15, AN 79-85443B XP002094328 ANONYMOUS: "Drinking water with improved taste - contains sweetener or flavouring agent, e.g. sodium saccharin, sucrose, L-menthol, etc." & RESEARCH DISCLOSURE, vol. 187, no. 012, 10 November 1979 (1979-11-10), Emsworth, GB

## Description

The invention relates to a sweetener tablet based on a mixture of sweeteners having improved taste and stability.

It is known that artificial sweeteners, for improving the taste, are often used in combinations of two or more of them, the aim being especially to obtain a taste resembling that of sugar as closely as possible, without involving unpleasant off-tastes.

Known products are based, for instance, on combinations of saccharin and sodium cyclamate. Although such combinations already provide a good taste, there remains a need for sweeteners having a taste still closer to that of sugar.

From the literature, it is known that the use of neohesperidin dihydrochalcone (NHDC) in combination with other artificial sweeteners, in amounts that do not or hardly contribute to the sweetness, contributes to the quality of the taste. In practice, the taste of the sweetener, in combination with a small amount of NHDC, is experienced more positively. European patent application 500.977 describes the use of NHDC in very small amounts for improving the body and mouthfeel of food products, in particular in combination with other sweeteners.

In Inglett et al, Dihydrochalcone Sweeteners - Sensory and Stability Evaluation, in J. Food Science, 1969, 34, 101-103, it is indicated that the use of NHDC in combination with saccharin and sodium cyclamate, with NHDC contributing about 25% to the sweetness, leads to an improvement of the taste. The taste of such combinations, however, is not appreciated well in practice.

NHDC is therefore especially recommended for use in very small amounts, whereby it does not, or practically does not, contribute to the sweetness, but does yield a clear improvement of the taste appreciation, the extent to which the taste resembles that of sugar.

In the manufacture of tablets based on the conventional compositions of saccharin, sodium cyclamate, and fillers and carriers, respectively, it was found that such compositions are not storage-stable. A composition which, in addition to saccharin, sodium cyclamate and NHDC, contains a carrier/filler system based on sodium carbonate, sodium bicarbonate and/or sodium citrate is found to discolor to yellow or even brown after being stored for some time at high humidity. This is a clear indication that the composition is not stable.

An object of the invention is therefore to provide a sweetener tablet based on saccharin, sodium cyclamate and NHDC, which, when stored, also at high air humidity, is stable, strong and disintegrates readily. The embodiments of the present invention are presented in the claims.

This object and other objects are achieved by a sweetener tablet based on a combination of saccharin, cyclamate and neohesperidin dihydrochalcone, comprising:
5-9% by weight of saccharin and/or sodium saccharin,
50-80% by weight of sodium cyclamate,
the weight ratio of sodium cyclamate to saccharin and/or sodium saccharin being between 8 and 12,
0.01-0.5% by weight of neohesperidin dihydrochalcone,
1-5% by weight selected from the group consisting of cellulose and derivatives thereof, starch and derivatives thereof, alginates, Group IIA and IIIA metal silicates, and combinations thereof, and
the balance is a food-approved filler.

Surprisingly, it has been found that such compositions unite all requirements to be satisfied by a tablet. More particularly, it is stable, also under very hard conditions, such as high air humidity, the tablet is sufficiently strong and yet disintegrates fast when introduced into a liquid, such as coffee. Also, the tablet gives the desired improvement of the body and mouthfeel, which in the literature is ascribed to the use of small amounts of NHDC.

The essence of the invention resides in the combination of a filler system with a disintegrator. In the context of the invention, the disintegrator is selected from the group consisting of cellulose and derivatives thereof, alginates, alkaline earth metal silicates, and combinations thereof. Thus, the choice of the disintegrators has been limited to the 'true' disintegrators, thereby excluding the carbonates and citrates used in conventional tablets, which compounds are not in fact disintegrators, although their presence leads to disintegration.

Suitable agents in this context are the magnesium and aluminum silicates, cellulose-based materials, such as cellulose itself, microcrystalline cellulose, cellulose-containing natural products (bran) and derivatives thereof, substituted celluloses (hydroxypropyl cellulose, methyl cellulose, carboxymethyl cellulose), starch and derivatives such as pregelatinized starch, and the like.

More particularly, crosslinked sodium carboxymethyl cellulose is preferred. The amounts of disintegrator are between 1 and 5% by weight based on the weight of the tablet. More particularly, this amount is between 2.5 and 4.5% by weight.

The tablet according to the invention also contains filler, viz. the balance. In general, that is not less than 10% by weight, because otherwise the tablet cannot be properly manufactured anymore. As filler, food-approved fillers are used, more particularly lactose, isomers and derivatives thereof, inulin, isomalt and/or oligofructose. Preferred is lactose or Tablettose™. The latter is a directly compressible milk sugar, especially suitable for tabletting.

According to the invention, as combination of sweeteners, inter alia sodium cyclamate and saccharin in the specified ratio are used. At these values, an optimum taste and sweetening strength is obtained. The relative ratio is obviously influenced by the choice of the saccharin component. If the free acid is used, the ratio is preferably from 10 to 15, whereas this ratio is preferably between 8 and 12 if the sodium salt is used. Saccharin can be present as such, or in the form of the sodium salt. From the point of view of solubility, the sodium salt is preferred.

Most preferred for a composition of a tablet according to the invention is a composition based on sodium cyclamate, sodium saccharin, NHDC, lactose as filler, and crosslinked sodium carboxymethyl cellulose as disintegrator. The relative ratios are then, in percent by weight, 60-75, 6-8, 0.9-0.13, 18-25 and 3-4, respectively.

The tablets according to the invention preferably have a weight in the range of from 45 to 75 mg per tablet. In combination with the contents of sweeteners in their relative ratios, such a tablet weight gives an ideal dosage of the sweeteners.

The invention will now be further explained in and by the following examples.

### EXAMPLES

On the basis of two formulations, tablets were manufactured, the first formulation being based on the conventional compositions and the second formulation being based on the composition according to the invention. It is incidentally noted that the first formulation does not constitute prior art, but, rather, is an obvious elaboration thereof. In this example, all amounts are expressed in percent by weight.

| Formulation 1 (tablet 64 mg) | |
|---|---|
| Sodium cyclamate | 60.8 |
| Saccharin | 5.06 |
| NHDC | 0.1 |
| Na-carbonate | 2.03 |
| lactose | 1.57 |
| mono-Na-citrate | 8.27 |
| Na-bicarbonate | 22.17 |

| Formulation 2 (tablet 58 mg) | |
|---|---|
| Sodium cyclamate | 67.09 |
| Sodium saccharin | 7.35 |
| NHDC | 0.11 |
| lactose | 21.95 |
| crosslinked sodium carboxymethyl cellulose | 3.5 |

The tablet according to formulation 1 discolored after storage at a high air humidity for some time, whilst the tablet according to formulation 2 was stable under the same conditions. The tablet according to formulation 2 was sufficiently hard and, when used in coffee, dissolved rapidly.

## Claims

1. A sweetener tablet, based on a combination of saccharin, cyclamate and neohesperidin dihydrochalcone, comprising:
5-9% by weight of saccharin and/or sodium saccharin,
50-80% by weight of sodium cyclamate,
the weight ratio of sodium cyclamate to saccharin and/or sodium saccharin being between 8 and 15,
0.01-0.5% by weight of neohesperidin dihydrochalcone,
1-5% by weight selected from the group consisting of cellulose and derivatives thereof, starch and derivatives thereof, alginates, Group IIA and IIIA metal silicates, and combinations thereof, and
the balance is a food-approved filler.

2. A sweetener tablet according to claim 1, wherein as disintegrator, crosslinked sodium carboxymethyl cellulose is used.

3. A sweetener tablet according to claim 1 or 2, wherein the filler is selected from the group consisting of lactose, derivatives of lactose, inulin, isomalt, oligofructose and combinations thereof.

4. A sweetener tablet according to claim 3, wherein, as filler, lactose or an isomer thereof is used.

5. A sweetener tablet according to claims 1-4, wherein the amount of neohesperidin dihydrochalcone is between 0.05 and 0.25% by weight.

6. A sweetener tablet according to claims 1-5, having the following composition in percent by weight:
| | |
|---|---|
| Sodium cyclamate | 60-75 |
| Sodium saccharin | 6-8 |
| NHDC | 0.9-0.13 |
| lactose | 18-25 |
| crosslinked sodium carboxymethyl cellulose | 3-4 |

7. A sweetener tablet according to claims 1-7, wherein the weight of the tablet is between 45 and 75 mg.

## Patentansprüche

1. Süßstofftablette, basierend auf einer Kombination von Saccharin, Cyclamat und Neohesperidin-Dihydrochalcon, umfassend:
5 - 9 Gew.-% Saccharin und/oder Natriumsaccharin,
50 - 80 Gew,-% Natriumcyclamat,
wobei das Gewichtsverhältnis von Natriumcyclamat zu Saccharin und/oder Natriumsaccharin zwischen 8 und 15 liegt,
0,01 bis 0,5 Gew.-% Neohesperidin-Dihydrochalcon,
1 bis 5 Gew.-%, ausgewählt aus der aus Cellulose und Derivaten davon, Stärke und Derivaten davon, Alginaten, Metallsillkaten der Gruppe IIA und IIIA und Kombinationen davon bestehenden Gruppe, und
wobei der Rest ein als Lebensmittel zugelassener Füllstoff ist.

2. Süßstofftablette nach Anspruch 1, wobel als Sprengmittel vernetzte Natriumcarboxymethylcellulose verwendet wird.

3. Süßstofftablette nach Anspruch 1 oder 2, wobei der Füllstoff ausgewählt wird aus der aus Lactose, Derivaten von Lactose, Inulin, Isomalt, Oligofructose und Kombinationen davon bestehenden Gruppe.

4. Süßstofftablette nach Anspruch 3, wobei als Füllstoff Lactose oder ein Isomer davon verwendet wird.

5. Süßstofftablette nach den Ansprüchen 1 bis 4, wobei die Menge an Neohesperidin-Dihydrochalcon zwischen 0,05 und 0,25 Gew.-% liegt.

6. Süßstofftablette nach den Ansprüchen 1 bis 5, die die folgende Zusammensetzung in Gewichtsprozent aufweist:
| | |
|---|---|
| Natriumcyclamat | 60 - 75 |
| Natriumsaccharin | 6 - 8 |
| NHDC | 0,9 - 0,13 |
| Lactose | 18 - 25 |
| Vernetzte Natriumcarboxymethylcellulose | 3 - 4 |

7. Süßstofftablette nach den Ansprüchen 1 bis 7, wobei das Gewicht der Tablette zwischen 45 und 75 mg liegt.

## Revendications

1. Comprimé édulcorant à base d'une combinaison de saccharine, de cyclamate et de dihydrochalcone de néohespéridine, comprenant
de 5 à 9% en poids de saccharine et/ou de saccharinate de sodium,
de 50 à 80% en poids de cyclamate de sodium,
le rapport massique de cyclamate de sodium sur la saccharine et/ou le saccharinate de sodium étant compris entre 8 et 15, de 0,01 à 0,5% en poids de dihydrochalcone de néohespéridine,
de 1 à 5% d'un composé choisi dans le groupe constitué par la cellulose et ses dérivés, l'amidon et ses dérivés, les alginates, les silicates des métaux des Groupes IIA et IIIA et leurs combinaisons, et
le reste étant un charge compatible sur le plan alimentaire.

2. Comprimé édulcorant selon la revendication 1, dans lequel on utilise, en tant qu'agent délitant, la carboxyméthylcellulose de sodium réticulée.

3. Comprimé édulcorant selon la revendication 1 ou 2, dans lequel la charge est choisie dans le groupe constitué par le lactose, les dérivés de lactose, l'inuline, l'isomaltose, l'oligofructose et leurs combinaisons.

4. Comprimé édulcorant selon la revendication 3, dans lequel on utilise, en tant que charge, le lactose ou un de ses isomères.

5. Comprimé édulcorant selon l'une quelconque des revendications 1 à 4, dans lequel la quantité de dihydrochalcone de néohespéridine est comprise entre 0,05 et 0,25% en poids.

6. Comprimé édulcorant selon l'une quelconque des revendications 1 à 5, ayant la composition suivante, pourcentage en poids :
| | |
|---|---|
| cyclamate de sodium | de 60 à 75 |
| saccharinate de sodium | de 6 à 8 |
| NHDC | de 0,9 à 0,13 |
| lactose | de 18 à 25 |
| carboxyméthylcellulose de sodium réticulée | de 3 à 4 |

7. Comprimé édulcorant selon l'une quelconque des revendications 1 à 6, dans lequel le poids du comprimé est compris entre 45 et 75 mg.
